# EUROPÄISCHE PATENTSCHRIFT

(11) **EP 1 205 773 B1**
(45) Veröffentlichungstag und Bekanntmachung des Hinweises auf die Patenterteilung: **02.02.2005**
(21) Anmeldenummer: 01126721.8
(22) Anmeldetag: 08.11.2001
(51) Int. Cl.: G02B 1/04, C08F 220/28, C08F 246/00, C08F 220/38, C08F 222/38

(54) **Hydrogelkontaktlinsen mit hoher Biokompatibilität**
Hydrogel contact lenses with improved biocompatibility
Lentilles de contact à base d'un hydrogel avec une biocompatibilité améliorée

(30) Priorität: 10.11.2000 DE 10055762
(43) Veröffentlichungstag der Anmeldung: 15.05.2002
(73) Patentinhaber: Wöhlk-Contact-Linsen GmbH, 24232 Schönkirchen (DE)
(72) Erfinder: Polzhofer, Kurt, Dr., 24232 Schönkirchen (DE); Fromme, Roland, 24232 Schönkirchen (DE); Haase, Lothar, 24217 Schönberg (DE); Herter, Kirstin, 24582 Bordesholm (DE); Kollosche, Birgit, 24106 Kiel (DE)
(74) Vertreter: Hamm, Volker, Dr.

(56) Entgegenhaltungen:
- US-A- 4 663 409
- US-A- 5 311 223
- PATENT ABSTRACTS OF JAPAN vol. 018, no. 306 (P-1752), 10. Juni 1994 (1994-06-10) & JP 06 067122 A (NIPPON OIL & FATS CO LTD), 11. März 1994 (1994-03-11)

## Beschreibung

Die Erfindung betrifft eine Hydrogel-Kontaktlinse mit einer hohen Sauerstoffdurchlässigkeit, ein hierfür geeignetes Polymermaterial, sowie dessen Verwendung zur Herstellung derartiger Linsen.

Die natürliche Cornea des Auges weist auf ihrer Innenseite eine endotheliale Zellschicht auf, deren Sauerstoffversorgung aus der Umgebungsluft durch die Cornea hindurch erfolgt. Um dies zu ermöglichen, muss sie daher eine hohe Sauerstoffdurchlässigkeit aufweisen. Ein dauerndes Aussetzen der Cornea mit der Umgebungsluft würde jedoch zu ihrem Austrocknen führen. Um dies zu vermeiden, wird daher die Cornea durch Lidschlag permanent mit einer als Tränen bezeichneten Flüssigkeit benetzt, die Proteine, Lipoproteine, Lipide und Mucine gelöst enthält. Durch die dauernde Neuzufuhr dieser Flüssigkeit und deren Verdunstung auf der Augenoberfläche müssten sich diese in der Tränenflüssigkeit gelösten Stoffe auf der Cornea ablagern und diese eintrüben.

Damit dies nicht geschieht, hat die Natur Schutzmechanismen entwickelt, die jedoch noch nicht gänzlich aufgeklärt sind.

Es besteht daher ein Bedürfnis, eine Kontaktlinse bereitzustellen, die eine hohe Sauerstoffdurchlässigkeit aufweist, gut verträglich ist und die Eigenschaften der Cornea nachahmt.

Der Wassergehalt der Cornea liegt üblicherweise bei ca. 65 bis 75 Gew.-%. Dabei zeigt die Cornea selbst ein außerordentlich hohes Wasserrückhaltevermögen. Auch hierdurch wird eine zu starke Abnahme der Oberflächenfeuchtigkeit auch in trockener Luft vermieden, wie etwa in kalter Polarluft, sowie auch in klimatisierten Räumen, wie etwa Flugzeugen, wo die Wasserverdunstung besonders stark ist. Dieses hohe Wasserrückhaltevermögen verhindert auch, dass die Konzentration der Tränenflüssigkeit zu stark ansteigt und die darin gelösten Stoffe auskristallisieren.

In diesem Zusammenhang ist es bekannt, dass für das Wasserrückhaltevermögen der natürlichen Cornea Sulfoverbindungen eine Rolle spielen, insbesondere Keratansulfate und Chondroitinsulfate.

Es ist außerdem bekannt, dass in der Natur die Ablagerung der oben genannten Substanzen auf der Comeaoberfläche durch eine Betainstruktur innerhalb des Collagens vermieden wird. Dabei enthält das Collagen der Cornea als Aminosäuren Glycin, Prolin, Glutamin, Alanin, Arginin, Asparagin, Lysin, Leucin, Serin, Isoleucin sowie andere.

Aus der US 5,311,223 ist eine Hydrogel-Kontaktlinse bekannt, deren Polymerzusammensetzung aus einem Reaktionsprodukt eines hydrophilen Methacrylamids sowie eines Acrylmonomers besteht, das in einer bevorzugten Ausführungsform ein zwitterionisches Monomer, wie z.B. ein Sulfobetain, z.B. N-(3-Sulfopropyl)-N-methacryloxyethyl-N,N-dimethylammoniumbetain (SPE) enthält, um das Wasserrückhaltevermögen zu verbessern. Darüber hinaus ist es aus der US 4,663,409 bekannt, das Wasserrückhaltevermögen dadurch zu verbessern, dass in die Matrix einer Hydrogel-Kontaktlinse Aminosäuremonomere einpolymerisiert werden. Das Wasserrückhaltevermögen war jedoch in vielen Fällen immer noch nicht zufriedenstellend.

Eine weitere wichtige Eigenschaft von Hydrogel-Kontaktlinsen ist deren Brechungsindex. Die natürliche Cornea zeigt einen Brechungsindex von 1,37, und die gesamte Augenlinse einen Brechungsindex von insgesamt 1,42. Der Brechungsindex der Kontaktlinse sollte daher dem der Cornea angenähert sein, ohne aber das Wasserrückhaltevermögen herabzusetzen.

Aufgabe der Erfindung ist es daher, eine Hydrogel-Kontaktlinse anzugeben, die eine außerordentlich hohe Sauerstoffdurchlässigkeit zeigt und deren Wasserrückhaltevermögen und deren Brechungsindex der natürlichen Cornea angenähert ist.

Zur Lösung der Aufgabe wird erfindungsgemäß eine Hydrogel-Kontaktlinse vorgeschlagen, deren Basismaterial mit Aminosäuren modifizierte Monomere und mit Betain modifizierte zwitterionische Monomere copolymerisiert enthält. Dabei sind die modifizierten Monomere vorzugsweise statistisch verteilt in das Basismaterial einpolymerisiert.

Überraschenderweise wurde erfindungsgemäß gefunden, dass dieses Copolymerisat nicht nur ein besonders ausgeprägtes Wasserrückhaltevermögen aufweist, sondern dass sich damit auch ein Brechungsindex einstellen lässt, der jenem der natürlichen Cornea von 1,37 sehr nahe kommt.

Auch der Wassergehalt entspricht in etwa jenem der natürlichen Cornea. Im gequollenen Zustand enthält das Kontaktlinsenmaterial nämlich 55 bis 60 % Wasser. Hierbei ist der Wassergehalt durch eine entsprechende Verwendung der Betaine bzw. der Aminosäuren relativ genau einstellbar, so dass je nach Wunsch Linsen mit höherem oder etwas niedrigerem Wassergehalt und damit auch unterschiedlichem Quellvermögen erhalten werden können.

Die Aminosäuren werden erfindungsgemäß direkt in das Polymer mit einpolymerisiert. Dazu werden sie vorzugsweise an ein mit der Polymerkette verknüpfbares Monomer gebunden. Erfindungsgemäß sind dabei solche Monomere bevorzugt, die sich direkt mit dem Basismaterial der Linse copolymerisieren lassen, d.h. direkt in die Polymerkette eingebaut werden. Erfindungsgemäß besonders bevorzugt sind α,ß-ungesättigte Carbonylverbindungen (Carbonylmodifizierer). Auf diese Weise werden die zur Copolymerisation verwendeten modifizierten Aminosäuren erhalten. Auch die erfindungsgemäß verwendeten Betaine werden auf diese Weise in die Polymermatrix copolymerisiert.

Bevorzugt handelt es sich bei der Aminosäure um eine im natürlichen Collagen der Cornea vorkommende Aminosäure, wie oben angegeben, oder ein Gemisch davon, bevorzugt aber Glycin. Grundsätzlich verwendbar sind aber alle natürlichen oder synthetischen Aminosäuren, wie etwa β-Alanin, γ-Aminobuttersäure, ω-Aminocapronsäure, ω- Aminododecansäure, β-Cyanalanin, ε-Methylhistidin, Canavanin, Djenkolsäure, 1-Azaserin, γ-Methylenglutaminsäure, N-Methyltyrosin, Glycin, Alanin, Serin, Cystin, Cystein, Lanthoinin, Phenylalanin, Tyrosin, Dijodotyrosin, Tryptophan, Histidin, Aminobuttersäure, Methionin, Valin, Norvalin, Leucin, Isoleucin, Norleucin, Arginin, Ornithin, Lysin, Asparaginsäure, Glutaminsäure, Threonin, Hydroxyglutaminsäure, Prolin, Hydroxyprolin, Asparagin, Glutamin, Desmosin, Isodesmosin und 5-Hydroxylysin.

α,β-ungesättigte Carbonylmodifizierer für die modifizierten Aminosäuren sind Acrylsäure, Crotonsäure, Methacrylsäure, Maleinsäure, Fumarinsäure, Itaconsäure und ihre funktionellen Derivate, wie Säurechloride, Anhydride, Amide und Ester.

Vorzugsweise liegt die in das Basismaterial der Kontaktlinse einpolymerisierte Aminosäure als Methacryloyl-Aminosäure vor.

Vorzugsweise ist das Aminosäuremonomer und das Betainmonomer mit einer Hauptkette oder/und Seitenkette des Matrixmaterials copolymerisiert.

Der im Hinblick auf das Wasserrückhaltevermögen und den Brechungsindex bevorzugte Aminosäureanteil in dem Polymer beträgt 0,5 bis 25 Gew.-%, weiter bevorzugt 0,5 bis 10 Gew.-% und besonders bevorzugt ca. 3 Gew-.%.

Das in die Matrix einpolymerisierte Betain liegt bevorzugt als Sulfobetain vor, insbesondere als N-(3-Sulfopropyl)-N-methacryloxyethyl-N,N-dimethylammoniumbetain (SPE) oder/und als Carboxybetain, welches mit dem Basismaterial ein blockfreies Mischpolymerisat bildet.

Der im Hinblick auf das Wasserrückhaltevermögen und den Brechungsindex bevorzugte Betainanteil in dem Polymer beträgt 0,5 bis 22 Gew.-%, bevorzugt 0,5 bis 10 Gew.-% und besonders bevorzugt ca. 3 Gew.-%.

Als Basismaterial für die erfindungsgemäße Kontaktlinse sind sämtliche durchsichtige Polymere geeignet. Zweckmäßige Polymere sind z.B. Acrylate und/oder Polyvinyle, insbesondere Polyvinylpyrrolidon.

Ein besonders bevorzugtes Basismaterial der Kontaktlinse enthält Hydroxyethylmethacrylat (HEMA) oder/und Hydroxypropylmethacrylat (HPMA) sowie Vinylpyrrolidon (VP) oder ein Gemisch davon. Für das Basismaterial verwendbar sind auch Acrylamidderivate, bevorzugt Dimethylacrylamid.

Bevorzugt beträgt der Anteil des Basismaterials im Polymer 53 bis 99 Gew.-%, weiter bevorzugt 80 bis 99 Gew.-% und besonders bevorzugt ca. 94 Gew.-%.

Je nach Mischungsverhältnis und Auswahl der Aminosäuremonomere und Betainmonomere weicht der Brechungsindex des Kontaktlinsenmaterials von jenem der natürlichen Cornea, 1,37, um nicht mehr als 10 % ab, bevorzugt nicht mehr als 4 %, und reicht besonders bevorzugt von 1,370-1,441. Vorzugsweise werden diese Werte im zumindest teilweise, insbesondere im völlig gequollenen Zustand erreicht.

Im wesentlichen wird der Brechungsindex des Kontaktlinsenmaterials von dem oder den Hauptmonomeren bestimmt. Dabei beträgt beispielsweise der Brechungsindex von dem besonders bevorzugten HEMA-Polymer im reinen Zustand 1,442. Durch Einpolymerisieren der Aminosäuren bzw. der Betainderivate lässt sich die Feinjustierung der Brechungsindizes beliebig auf Werte zwischen 1,370 - 1,441 einstellen. Dabei ist zu beachten, dass eine Erhöhung der Konzentration der Aminosäure bzw. Betainderivate in den Polymeren zu einer Verringerung des Brechungsindex führt. Durch die dabei gleichzeitig bewirkte Erhöhung des Wassergehalts im Polymer nähert sich der Brechungsindex dabei auch mehr oder weniger demjenigen des reinen Wassers von 1,333.

Im gequollenen Zustand enthält die erfindungsgemäße Kontaktlinse über 50 Gew.-% Wasser, bevorzugt 55 bis 60 Gew.-%.

Mit dem zuvor beschriebenen erfindungsgemäßen Kontaktlinsenmaterial lassen sich insbesondere Sauerstoffdurchlässigkeiten mit einem DK-Wert von > 8 x 10⁻¹¹, bevorzugt > 15 x 10⁻¹¹ und besonders bevorzugt von ca. 23 x 10⁻¹¹ erreichen.

Nach einem weiteren Aspekt der Erfindung wird ein Verfahren zur Herstellung eines für Hydrogel-Kontaktlinsen geeigneten Polymermaterials angegeben, gekennzeichnet durch die Schritte: Mischen von Methacrylat-Monomeren mit Aminosäuren modifizierten Monomeren und mit Betainen modifizierten Monomeren und Polymerisieren dieser Materialien mit einem Starter und einem Vernetzer, insbesondere durch radikalische Polymerisation.

Bevorzugte Starter sind Azoverbindungen und Peroxoverbindungen oder/und photochemische Reaktionsstarter. Weitere geeignete Starter sind Peroxide, Azoverbindungen, UV-Bestrahlung, Oxidations-Reduktions-Systeme und ähnliche Starter. Beispiele hier geeigneter freier radikalischer Starter sind Bis-(isopropyl)peroxydicarbonat, 2,2'-Azobis-(isobutyronitril), Acetylperoxid, Benzoinmethylether, Lauroylperoxid, Decanoylperoxid, Benzoylperoxid, 2,2'Azobis(2,4-dimethylvaleronitril), Tert.-Butylperoctoat, Phthalperoxid, Cumolhydroperoxid, Diethoxyacetophenon sowie Tert.-Butylperoxypivalat.

Bevorzugt liegt der Vernetzer in einer Menge von 0,01 bis 3 Gew.-%, weiter bevorzugt von 0,5 bis 2 Gew.-% und besonders bevorzugt von 0,1 bis 5 Gew.-% vor. Hier geeignete Vernetzer sind polyfunktionale Derivate verschiedener α,β-ungesättigter Säuren, z.B. Acrylsäure, Methacrylsäure, Crotonsäure, Itaconsäure, Maleinsäure und Fumarsäure, Acrylamid, Methacrylamid und multivinylsubstituierte Benzole. Besonders geeignet sind z.B. Ethylenglykoldiacrylat oder -dimethacrylat, Diethylenglykoldiacrylat oder -dimethylacrylat, Tetraethylenglykoldiacrylat oder -dimethacrylat, Polyethylenglykoldiacrylat oder -dimethacrylat, Trimethylolpropantriacrylat oder -trimethacrylat, Bisphenol-A-diacrylat oder -dimethacrylat, ethoxyliertes Bisphenol-A-diacrylat oder -dimethacrylat, Pentaerythrioltri und -tetraacrylat oder -methacrylat, Tetramethylendiacrylat oder -dimethacrylat, Methylenbis-acrylamid oder -methacrylamid, Dimethylenbisacrylamid oder -methacrylamid, N,N'-Dihydroxyethylenbisacrylamid oder -methacrylamid, Hexamethylenbisacrylamid oder -methacrylamid, Decamethylenbisacrylamid oder -methacrylamid, Divinylbenzol, Vinylmethacrylat und Allylmethacrylat. Weiter in Frage kommen Vernetzer auf Siloxan-Basis sowie resonanzfreie cyclische Di(alkylen-tert. Amin)-Verbindungen, z.B. N,N'-Divinylethylenharnstoff, oder auch Di- oder Polyvinylether, di- oder polyvalente Alkohole, wie etwa Ethylenglykol-divinylether.

Die Kontaktlinse kann einzeln als Formgusslinse hergestellt werden, mit einer Polymerisationszeit von weniger als 1 Stunde, bevorzugter weniger als 30 Minuten. Hierbei wird bevorzugt 0,2 bis 0,5 Gew.-% Reaktionsstarter eingesetzt.

Nach einer weiteren Möglichkeit wird das Gemisch zunächst zu einem blockförmigen, vorzugsweise stangenförmigen Material temperaturgesteuert über eine längere Zeit, etwa 1 bis 3 Tage, polymerisiert, und dann werden aus diesem Blockmaterial die einzelnen Kontaktlinsen mechanisch herausgearbeitet, z.B. herausgedreht. Hierbei werden bevorzugt 0,05 bis 0,2 Gew.-% Reaktionsstarter eingesetzt.

In einer weiteren erfindungsgemäßen Ausführungsform wird bei der Polymerisation bis zu 20 Gew.-% Glycerin zugesetzt.

Im folgenden werden Ausführungsbeispiele der Erfindung anhand der beigefügten Zeichnungen erläutert. Es zeigen:
Figur 1 ein Beispiel der Synthese einer erfindungsgemäßen Kontaktlinse;
Figur 2 die Dehydratisierung und Rehydratisierung von erfindungsgemäßen und herkömmlichen Kontaktlinsen; und
Figur 3 das Dehydrationsprofil von erfindungsgemäßen und herkömmlichen Kontaktlinsen.

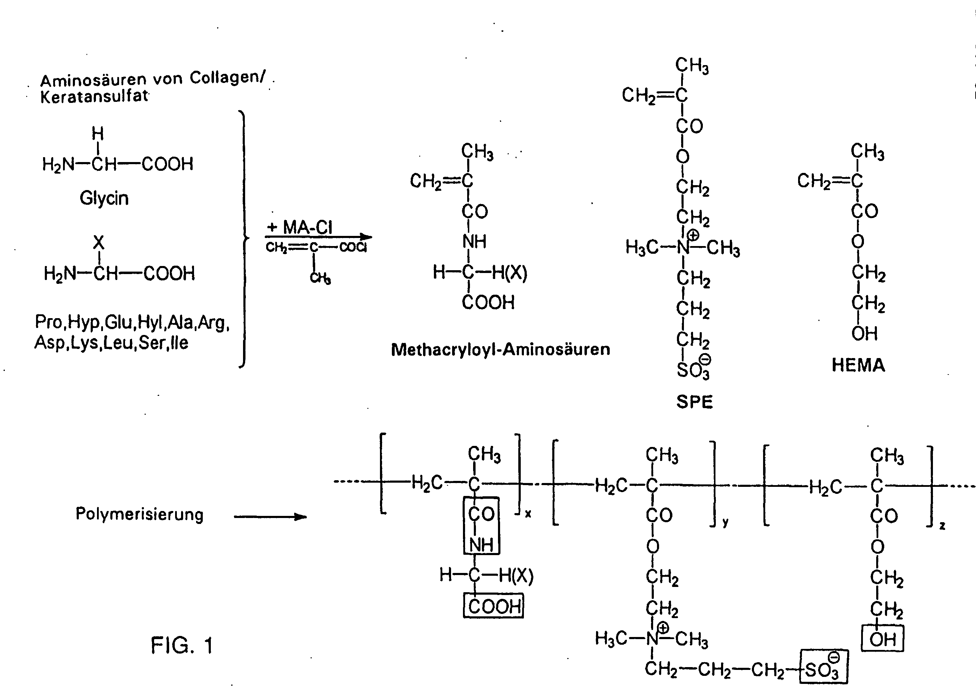

Figur 1 zeigt eine Polymerisation von erfindungsgemäßem Kontaktlinsenmaterial aus in Collagen enthaltenen Aminosäuren. Dabei wird von ihrer Modifizierung zu Methacryloylaminosäuren ausgegangen. Ebenso gezeigt wird die Struktur von SPE (N-(3-Sulfopropyl)-N-methacryloxyethyl-N,N-dimethylammoniumbetain) und HEMA (Hydroxymethylmethacrylat) als Basismaterial. Diese Stoffe werden miteinander polymerisiert. Die Polymerisationsmenge von X (Methacryloylaminosäuren) zu Y (SPE) zu Z (HEMA) beträgt hier X = 0,5 bis 10 Gew.-%, Y = 0,5 bis 10 Gew.-% und Z = 80 bis 99 Gew.-%. Bei Y-Werten ab 9 Gew.-% können jedoch je nach Bedingungen unter Umständen bereits Mischungsprobleme auftreten, die sich jedoch mittels Zusätzen wie z.B. Glycerin vermeiden lassen.

Es besteht auch die Möglichkeit, die ganze Polymerisation im Beisein von 0 bis 20 % Glycerin und den restlichen Polymerisationspartnern durchzuführen. In diesem Fall bilden die restlichen Polymerisationspartner (im folgenden auch als Festkörper bezeichnet) einen Anteil von X = 0,5 bis 25 Gew.-%, Y = 0,5 bis 22 Gew.-% und Z = 99 bis 53 Gew.-%. Im Normalfall wirkt das HEMA selbst als Lösungsmittel für die Methacryloylaminosäure (X) sowie für SPE (Y).

Eine weitere Möglichkeit zur Herstellung der erfindungsgemäßen Linsen besteht darin, SPE dadurch abzuwandeln, dass die Sulfatgruppe durch eine Carbonsäuregruppe ersetzt wird. Grundsätzlich können auch andere Betaine in Betracht gezogen werden, die an eine Methacrylatverbindung als Basismaterial anheftbar sind, so dass diese in die Methacrylpolymerkette eingebaut werden. Vorzugsweise soll hierbei kein Blockpolymer entstehen, sondern ein vollständiges Mischpolymerisat ohne Blockbildung.

Anstatt HEMA ist erfindungsgemäß auch HPMA (Hydroxypropylmethacrylat) und Mischungen dieser Substanz als Polymerisationsbasis verwendbar. Eine weitere Möglichkeit besteht darin, als Basismaterial Vinylpyrrolidon (VP) zu verwenden. Dabei müssen die Aminosäuren sowie die betainartigen Zwitterionen zur Copolymerisation entsprechend modifiziert werden. Ebenfalls geeignet sind Acrylamidderivate, wie Dimethylacrylamid.

Allgemein werden die Aminosäure modifizierten Monomere durch Umsetzen der Aminosäure mit einem an einer nicht polymerisierbaren Stelle reaktiven Monomer erhalten. Für die Acrylate sind bevorzugte Monomere, beispielsweise Acryloylchlorid-Derivate, zu verwenden.

Die Erfindung soll im folgenden anhand einiger Beispiele näher erläutert werden.

### BEISPIEL 1 (Vergleichsbeispiel)

Es werden 98,5 g HEMA, 1,5 g Methacrylsäure sowie 0,37 g 2,2'-Azobis(2,4-dimethylvaleronitril) in Förmchen aus Polypropylen gefüllt und bei 100°C 30 Minuten lang polymerisiert. Die so erhaltenen ausgehärteten Kontaktlinsen werden in gepufferter, physiologischer Kochsalzlösung gequollen, verpackt und sterilisiert. Der Wassergehalt der so erhaltenen Kontaktlinse beträgt ca. 40 %.

### BEISPIEL 2

### Herstellung von N-Methacryloylglycin

Glycin (7,5 g, 0,1 Mol) wird in 30 ml wässriger Natronlauge (8 g, 0,2 Mol) gelöst und unter Eiskühlung mit Methacryloylchlorid (10,45 g, 0,1 Mol), gelöst in 10 ml Chloroform, unter Rühren tropfenweise zugesetzt. Danach lässt man bei Raumtemperatur während einer Stunde weiterreagieren. Die Lösung wird unter Eiskühlung in 5 normaler wässriger Salzsäure auf pH 2 eingestellt und mit Ethylacetat erschöpfend extrahiert. Die organische Lösung wird über Natriumsulfat getrocknet und im Vakuum eingedampft. Man erhält dann 10 g (70 %) eines kristallinen Produkts von N-Methacryloylglycin mit einem Schmelzpunkt von 104 bis 105 °C.

Analog lassen sich auch N-Methacryloylderivate von Alanin, Valin, Leucin, Prolin, Glutaminsäure, Asparaginsäure und dgl. herstellen.

### BEISPIEL 3 (erfindungsgemäß)

Ein Gemisch aus 93,28 g 2-Hydroxyethylenmethacrylat (HEMA), 3 g N-Methacryloylglycin (MA-Gly) (Beispiel 2), 3 g N,N-Dimethyl-N-(2-methacrylolyethyl)-N-(3-sulfopropyl)ammoniumbetain (SPE), 0,35 g Ethylenglykoldimethacrylt (EGDMA), 0,37 g 2,2'-Azobis(2,4-dimethylvaleronitril) und 0,005 g Macrolex® (erhältlich von Bayer AG, Leverkusen) Grün G werden in Förmchen aus Polypropylen gefüllt und bei 100 °C während 30 Minuten polymerisiert. Die ausgehärteten Kontaktlinsen werden in gepufferter physiologischer Kochsalzlösung gequollen, verpackt und sterilisiert. Der Wassergehalt der vollständig gequollenen Kontaktlinse beträgt dann ca. 55 %.

Analog dieser Vorgehensweisen wurden weitere erfindungsgemäße Kontaktlinsen polymerisiert und gequollen. Die Ergebnisse sind in der folgenden Tabelle I angegeben. Das Wasser kann innerhalb der Linsen unterschiedlich absorptiv gebunden vorliegen. Dabei ist zwischen direkt gebundenem Wasser und dem freien Wasser zu unterscheiden. Das direkt gebundene Wasser wird an die funktionellen Gruppen mittels ionischer Wechselwirkungen elektrostatisch gebunden, wohingegen das freie Wasser zwischen den einzelnen Molekülgruppen eingelagert wird. Dieses freie Wasser wird generell leichter wieder abgegeben als das direkt an die funktionellen Gruppen gebundene Wasser.

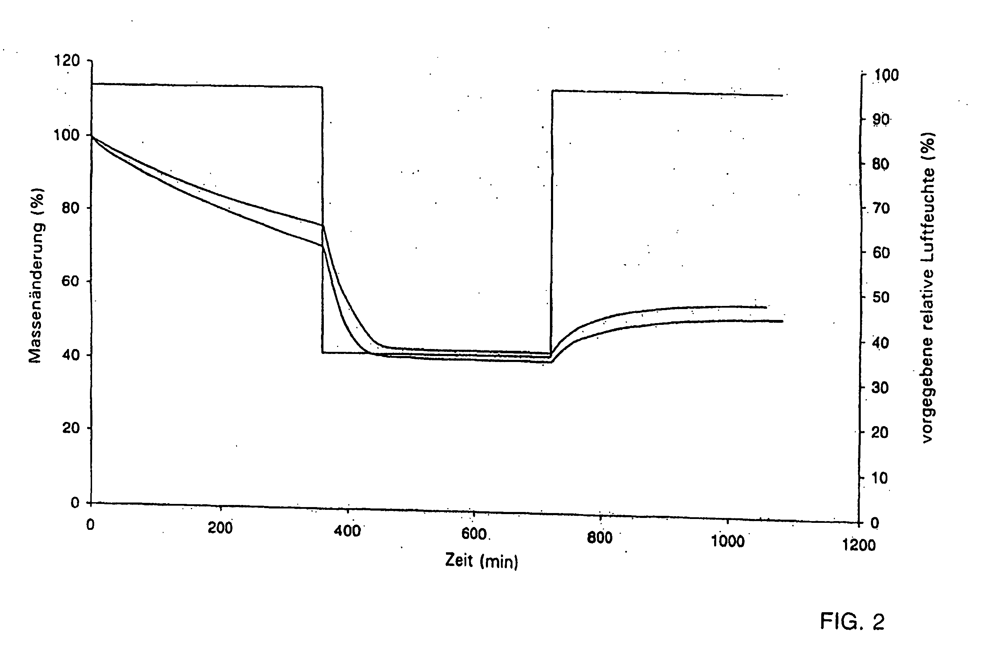

Eine Kurve hierzu ist in Figur 2 dargestellt. Bei diesem Versuch wurden erfindungsgemäße (gemäß Beispiel 3, Tabelle I BK 70-91) und herkömmliche Kontaktlinsen (gemäß Beispiel 1) zunächst in einer zu 95 % mit Feuchtigkeit gesättigten Luft dehydratisiert, dann wurde stufenartig der Luftfeuchtegehalt auf 40 % gesenkt und anschließend stufenartig wieder auf 95 % erhöht, um das Dehydratisierungs- und Rehydratisierungsverhalten erfindungsgemäßer und herkömmlicher Linsen zu messen. Die linke Ordinate gibt den Feuchtigkeitsgehalt innerhalb der Linse an, und die rechte Ordinate die vorgegebene Luftfeuchtigkeit. Die Untersuchung wurde bei 35 °C durchgeführt, entsprechend der typischen Temperatur der Augenlinse bzw. der Cornea. Die obere Kurve zeigt das Verhalten des erfindungsgemäßen Linsenmaterials, und die untere Kurve zeigt das Verhalten des herkömmlichen Linsenmaterials. Aus dem Diagramm ist deutlich, dass der Feuchtegehalt des erfindungsgemäßen Linsenmaterials bei Dehydratisierung im gleichen Zeitraum wesentlich weniger abnimmt als bei herkömmlichem Linsenmaterial, und dass beim Rehydratisierungsversuch das erfindungsgemäße Linsenmaterial im gleichen Zeitraum deutlich mehr Wasser aufnimmt als das herkömmliche Linsenmaterial.

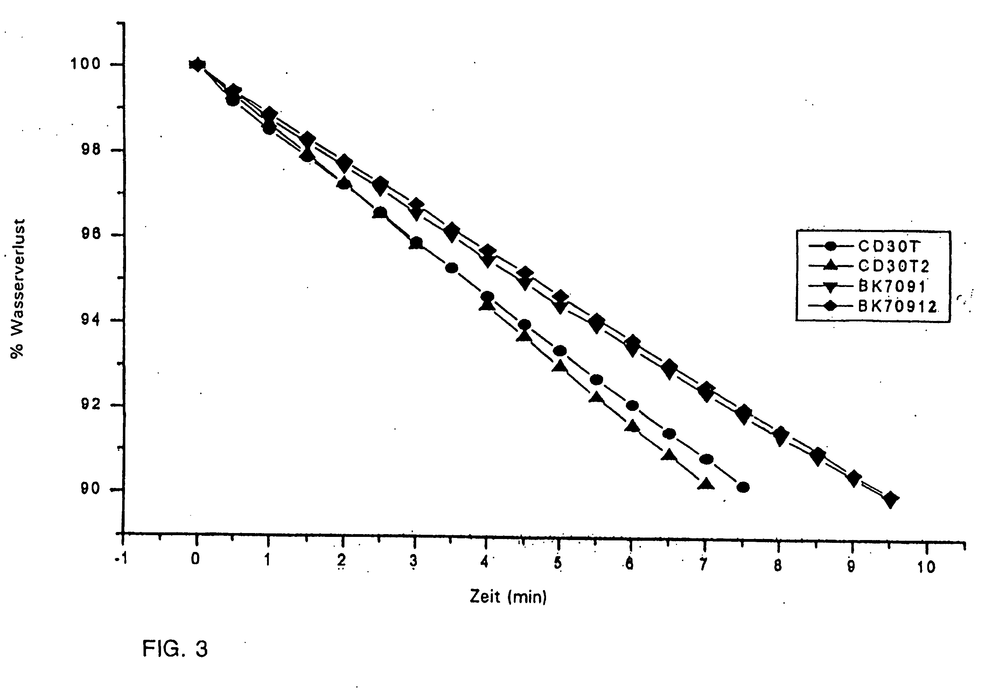

Einen weiteren Vergleich zeigt das Dehydratationsprofil von Figur 3, worin der prozentuale Wasserverlust über die Zeit bei Raumtemperatur und trockener Umgebungsluft aufgetragen ist für erfindungsgemäße Kontaktlinsen (BK7091a, und BK7091b) sowie herkömmlichen Hydrogel-Kontaktlinsen (CD30T und CD30T2). Auch hier wird deutlich, dass die erfindungsgemäßen Kontaktlinsen im Vergleich zu herkömmlichen langsamer dehydratisieren.

Auch die Sauerstoffpermeabilität des erfindungsgemäßen Linsenmaterials ist besser als von herkömmlichem Hydrogel-Kontaktlinsenmaterial. Die Sauerstoffpermeabilität wird mit dem sogenannten Dk-Wert angegeben, der eine Materialkonstante für das Linsenmaterial ist und das Produkt von Diffusionskoeffizient und Löslichkeitskonstante von Sauerstoff im Polymer darstellt.

Dieser Dk-Wert ist daher unabhängig von der Geometrie der Kontaktlinse wie z.B. der Dicke.

Wird nun der Dk-Wert durch die Linsendicke dividiert, so erhält man die tatsächliche Sauerstoffdurchlässigkeit bzw. die Sauerstofftransmissibilität, d.h. die tatsächliche Sauerstoffmenge, welche durch die Kontaktlinse bis zum Auge gelangt. Der Dk-Wert wird wie folgt bestimmt: Dk = 2 x e^{0,041 x Wassergehalt} x 10⁻¹¹, mit der Einheit ([cm²/sec.] x [ml Sauerstoff/ml x hPa]). Herkömmliches Poly-HEMA hat eine Sauerstoffpermeabilität von 8 x 10⁻¹¹, während die neuen erfindungsgemäßen Materialien eine Sauerstoffpermeabilität von ca. 23 x 10⁻¹¹ aufweisen.

Zur Herstellung der Linsen besteht einerseits die Möglichkeit, das noch nicht polymerisierte Gemisch in kontaktlinsenförmige Förmchen zu füllen, z.B. aus Polypropylen, und darin das Gemisch auspolymerisieren zu lassen, zum Erhalt sogenannter Formgusslinsen. Andererseits besteht die Möglichkeit, eine größere Menge an Polymerisationsgemisch herzustellen und dieses als einen größeren Block auspolymerisieren zu lassen, z.B. als Stange, aus der dann die Kontaktlinsen z.B. mittels einer Drehbank herausgedreht werden. Je nachdem, ob die Kontaktlinsen als Formgusslinsen oder aus einer auspolymerisierten Stange herausgearbeitet werden sollen, sind die Anteile der Vernetzer und Polymerisationsinitiatoren sowie die Polymerisationszeiten unterschiedlich.

Bei der Herstellung von Stangenmaterial erfolgt die Polymerisation über ein temperaturgesteuertes Verfahren über 1 bis 2 oder 3 Tage hinweg, und das Produkt wird anschließend getempert, bevor die einzelnen Linsen daraus gefertigt werden, wohingegen die Formpolymerisation zu Formgusslinsen, bei der nur winzige Mengen, d.h. wenige Mikroliter verarbeitet werden, in wenigen Minuten, üblicherweise innerhalb 30 Minuten, erfolgt.

Die Polymerisation erfolgt in beiden Fällen, d.h. bei Formgusslinsen und Polymerisation als Stange, bevorzugt als radikalische Polymerisation, durch Auslösung mittels radikalischer Starter, wie etwa Azoverbindungen und Peroxoverbindungen, sowie mit photochemischen Reaktionsstartem. Sowohl bei Stangenpolymerisation als auch bei der Formlinsenpolymerisation werden etwa zwischen 0,01 und 3 Gew.-% Vernetzer eingesetzt, bevorzugt 0,5 bis 2 Gew.-% und besonders bevorzugt 0,1 bis 0,5 Gew.-%. Durch die hohe Vernetzung wird der Wassergehalt und das Wasserrückhaltevermögen verringert. Dies lässt sich jedoch durch einen erhöhten Zusatz von Aminosäuren kompensieren.

Bei der Stangenpolymerisation wird nur eine geringe Menge an Reaktionsstartern eingesetzt, nämlich 0,05 bis 0,2 Gew.-%, da eine höhere Konzentration zu Unebenheiten und größerem Schrumpf des fertigen Produkts führt. Bei der Formlinsenpolymerisation, die in sehr viel kürzerer Zeit erfolgt, muss eine höhere Menge an Reaktionsstartern eingesetzt werden. Der Schrumpf ist bei diesen geringen Massen ohne Bedeutung. Die bei Formlinsenpolymerisation verwendete Menge an Reaktionsstartern beträgt z.B. 0,2 bis 0,5 Gew.-%. Hier lassen sich auch die reaktiven Reaktionsstarter verwenden, wie oben im Beispiel angegeben. Bei der Stangenpolymerisation läßt sich z.B. 2,2'-Azobisisobutyronitril (AIBN) verwenden.

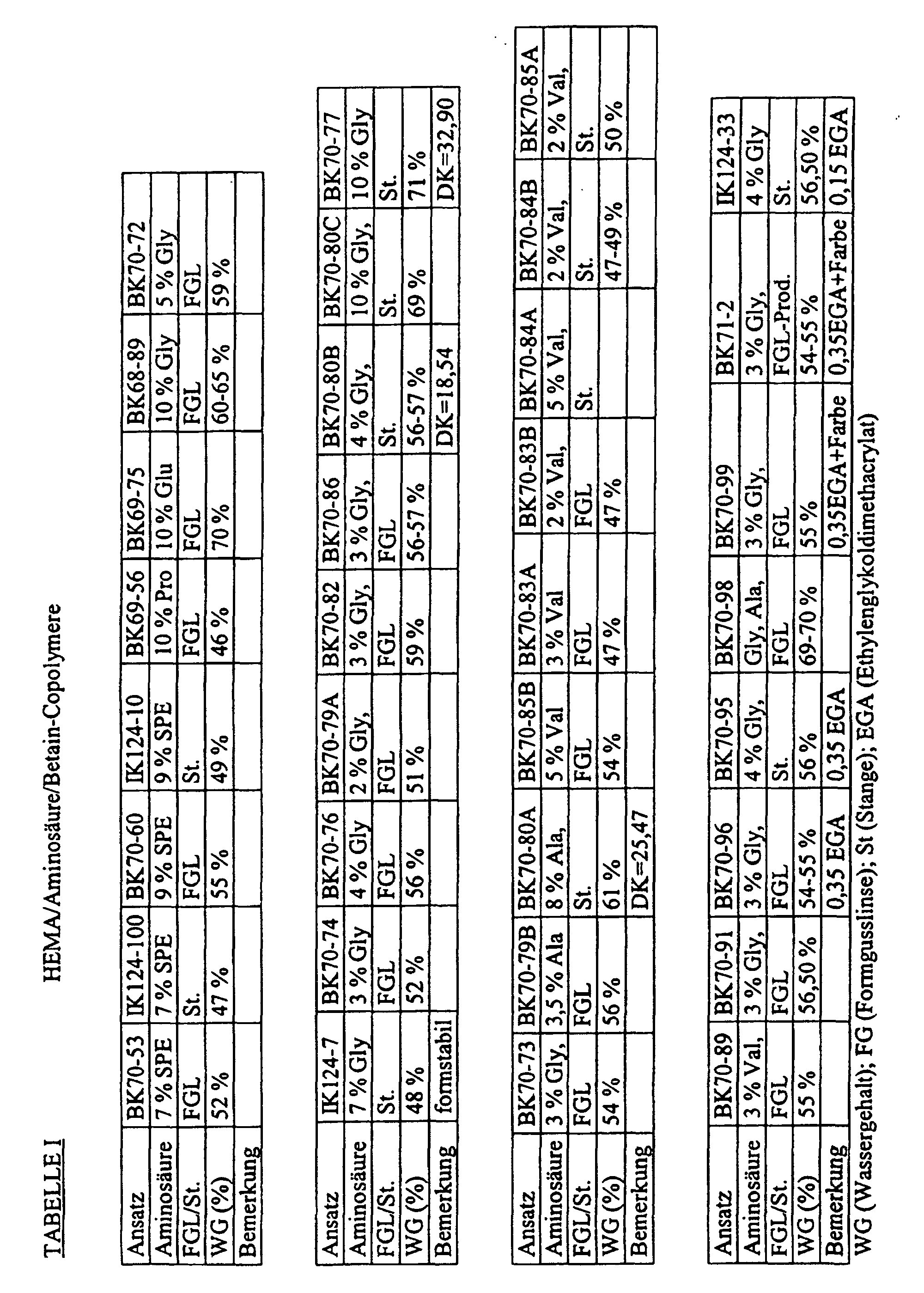

## Patentansprüche

1. Hydrogel-Kontaktlinse,
**dadurch gekennzeichnet, dass** ihr Basismaterial mit Aminosäuren modifizierte Monomere und mit Betain modifizierte Monomere copolymerisiert enthält.

2. Hydrogel-Kontaktlinse nach Anspruch 1,
**dadurch gekennzeichnet, dass** die Aminosäure aus in natürlichem Collagen der Cornea vorkommenden Aminosäuren ausgewählt ist, insbesondere Glycin, Prolin, Glutamin, Alanin, Arginin, Asparagin, Lysin, Leucin, Serin, Isoleucin, bevorzugt Glycin.

3. Hydrogel-Kontaktlinse nach Anspruch 1 oder 2,
**dadurch gekennzeichnet, dass** das Aminosäure modifizierte Monomer eine Methacryloylaminosäure ist.

4. Hydrogel-Kontaktlinse nach einem der vorhergehenden Ansprüche,
**dadurch gekennzeichnet, dass** das Aminosäure modifizierte Monomer mit einer Hauptund/oder Seitenkette des Basismaterials der Kontaktlinse copolymerisiert ist.

5. Hydrogel-Kontaktlinse nach einem der vorhergehenden Ansprüche,
**dadurch gekennzeichnet, dass** der Aminosäurenanteil im Polymer 0,5 bis 25 Gew.-%, bevorzugt 0,5 bis 10 Gew.-% und besonders bevorzugt ca. 3 Gew.-% beträgt.

6. Hydrogel-Kontaktlinse nach einem der vorhergehenden Ansprüche,
**dadurch gekennzeichnet, dass** das Betain ein Sulfobetain, bevorzugt N-(3-Sulfopropyl)-N-methacryloxyethyl-N,N-dimethylammoniumbetain (SPE) oder/und ein Carboxybetain ist, welches mit dem Basismaterial ein blockfreies Mischpolymerisat bildet.

7. Hydrogel-Kontaktlinse nach Anspruch 6,
**dadurch gekennzeichnet, dass** der Betainanteil im Polymer 0,5 bis 22 Gew.-%, bevorzugt 0,5 bis 10 Gew.-% und besonders bevorzugt ca. 3 Gew.-% beträgt.

8. Hydrogel-Kontaktlinse nach einem der vorhergehenden Ansprüche,
**dadurch gekennzeichnet, dass** das Basismaterial der Kontaktlinse Hydroxyethylmethacrylat (HEMA) oder/und Hydroxypropylmethacrylat (HPMA) oder/und Vinylpyrrolidon (VP) oder/und Acrylamidderivate, bevorzugt Dimethylacrylamid, enthält.

9. Hydrogel-Kontaktlinse nach Anspruch 8,
**dadurch gekennzeichnet, dass** das Basismaterial im Polymer 53 bis 99 Gew.-%, bevorzugt 80 bis 99 Gew.-% und besonders bevorzugt 94 Gew.-% beträgt.

10. Hydrogel-Kontaktlinse nach einem der vorhergehenden Ansprüche,
**dadurch gekennzeichnet, dass** der Brechungsindex der Kontaktlinse 1,22 - 1,51 beträgt.

11. Hydrogel-Kontaktlinse nach einem der vorhergehenden Ansprüche,
**dadurch gekennzeichnet, dass** die Kontaktlinse im gequollenen Zustand mehr als 50 Gew.-% Wasser, insbesondere 55 bis 60 Gew.-% Wasser enthält.

12. Hydrogel-Kontaktlinse nach einem der vorhergehenden Ansprüche,
**dadurch gekennzeichnet, dass** die O₂-Durchlässigkeit einen Dk-Wert von > 8 x 10⁻¹¹, bevorzugt > 15 x 10⁻¹¹ und besonders bevorzugt von ca. 23 x 10⁻¹¹ besitzt.

13. Verfahren zur Herstellung eines Polymermaterials für eine Hydrogel-Kontaktlinse, insbesondere nach einem der vorhergehenden Ansprüche, **gekennzeichnet durch** die Schritte:
Mischen von Methacrylat-Monomeren, Monomeren auf Aminosäurebasis und Monomeren auf Betainbasis und
Polymerisieren dieser Materialien mit einem Starter und einem Vernetzer.

14. Verfahren nach Anspruch 13,
**dadurch gekennzeichnet, dass** als Starter radikalische Starter, bevorzugt Azoverbindungen oder/und Peroxyverbindungen oder/und photochemische Reaktionsstarter verwendet werden.

15. Verfahren nach Anspruch 13 oder 14,
**dadurch gekennzeichnet, dass** der Vernetzer in einer Menge von 0,01 bis 3 Gew.-%, bevorzugt von 0,5 bis 2 Gew.-%, besonders bevorzugt von 0,1 bis 0,5 Gew.-% hinzugefügt wird.

16. Verfahren nach einem der Ansprüche 13 bis 15,
**dadurch gekennzeichnet, dass** die Kontaktlinse einzeln als Formgusslinse mit einer Polymerisationszeit von weniger als 1 Stunde polymerisiert wird.

17. Verfahren nach Anspruch 16,
**dadurch gekennzeichnet, dass** der Reaktionsstarter in einer Menge von 0,2 bis 0,5 Gew.-% hinzugefügt wird.

18. Verfahren nach einem der Ansprüche 13 bis 15,
**dadurch gekennzeichnet, dass** das Materialgemisch zunächst zu einem blockförmigen, bevorzugt stangenförmigen Material temperaturgesteuert über ca. 1 bis 3 Tage hinweg polymerisiert wird und dann aus dem Blockmaterial die einzelnen Kontaktlinsen mechanisch herausgearbeitet werden.

19. Verfahren nach Anspruch 18,
**dadurch gekennzeichnet, dass** der Reaktionsstarter in einer Menge von 0,05 bis 0,2 Gew.-% hinzugefügt wird.

20. Verfahren nach einem der Ansprüche 13 bis 19,
**dadurch gekennzeichnet, dass** zur Polymerisation bis zu 20 % Glycerin hinzugefügt wird.

21. Verfahren nach Anspruch 20,
**dadurch gekennzeichnet, dass** bei der Verwendung von Glycerin der Anteil der Monomere auf Aminosäurebasis 0,5 bis 25 Gew.-%, der Anteil der Monomere auf Betainbasis 0,5 bis 22 Gew.-% und der Anteil der Methacrylat-Monomere 99 bis 53 Gew.-% beträgt.

## Claims

1. A hydrogel contact lens,
**characterized in that** its basic material contains copolymerized monomers, modified with amino acids, and copolymerized monomers, modified with betaine.

2. The hydrogel contact lens according to claim 1,
**characterized in that** the amino acid is selected from amino acids occurring in the natural collagen of the cornea, especially from glycine, proline, glutamine, alanine, arganine, asparagine, lysine, leucine, serine, isoleucine; preferably glycine.

3. The hydrogel contact lens of claim 1 or 2,
**characterized in that** the monomer, modified with amino acid, is a methacryloyl amino acid.

4. The hydrogel contact lens of one of the preceding claims,
**characterized in that** the monomer, modified with amino acid, is copolymerized with a main chain and/or a side chain of the basic material of the contact lens.

5. The hydrogel contact lens of one of the preceding claims,
**characterized in that** the percentage of amino acid in the polymer is 0.5 to 25 wt.-%, preferably 0.5 to 10 wt.-% and particularly about 3 wt.-%.

6. The hydrogel contact lens of one of the preceding claims,
**characterized in that** the betaine is a sulfobetaine, preferably N-(3-sulfopropyl)-N-methacrylhydroxyethyl-N,N-dimethyl-ammonium betaine (SPE) and/or a carboxybetaine, which forms a block-free copolymer with the basic material.

7. The hydrogel contact lens of claim 6,
**characterized in that** the percentage of betaine in the polymer is 0.5 to 22 wt.-%, preferably 0.5 to 10 wt.-% and particularly about 3 wt.-%.

8. The hydrogel contact lens of one of the preceding claims,
**characterized in that** the basic material of the contact lens contains hydroxyethyl methacrylate (HEMA) and/or hydroxypropyl methacrylate (HPMA) and/or vinylpyrrolidone (VP) and/or acrylamide derivatives, preferably dimethylacrylamide.

9. The hydrogel contact lens of claim 8,
**characterized in that** the basic material constitutes 53 to 99 wt.-%, preferably 80 to 99 wt.-% and particularly 94 wt.-% of the polymer.

10. The hydrogel contact lens of one of the preceding claims,
**characterized in that** the refractive index of the contact lens is 1.22 to 1.51.

11. The hydrogel contact lens of one of the preceding claims,
**characterized in that** the contact lens, in the swollen state, contains more than 50 wt.-% in particular, 55 to 60 wt.-% of water.

12. The hydrogel contact lens of one of the preceding claims,
**characterized in that** the oxygen permeability has a Dk value of > 8 x 10⁻¹¹, preferably of > 15 x 10⁻¹¹ and especially of about 23 x 10⁻¹¹.

13. A process for the preparation of a polymer material for a hydrogel contact lens, especially one of the preceding claims, **characterized by** the following steps:
mixing methacrylate monomers, monomers based on amino acids and monomers based on betaine and
polymerizing these materials with a starter and a cross-linking agent.

14. The process of claim 13,
**characterized in that** free radical starters, preferably azo compounds and/or peroxy compounds and/or photochemical reaction starters are used as starter.

15. The process of claims 13 or 14,
**characterized in that** the cross-linking agent is added in an amount of 0.01 to 3 wt.-%, preferably of 0.5 to 2 wt.-% and especially of 0.1 to 0.5 wt.-%.

16. The process of one of the claims 13 to 15,
**characterized in that** the contact lens is polymerized individually as a cast lens with a polymerization time of less than one hour.

17. The process of claim 16,
**characterized in that** the reaction starter is added in an amount of 0.2 to 0.5 wt.-%.

18. The process of one of the claims 13 to 15,
**characterized in that** the mixture of material initially is polymerized into a block-shaped, preferably rod-shaped material for approximately 1 to 3 days at a controlled temperature and the individual contact lenses are then machined out of the block material.

19. The process of claim 18,
**characterized in that** the reaction starter is added in an amount of 0.05 to 0.2 wt.-%.

20. The process of one of the claims 13 to 19,
**characterized in that** up to 20 % of glycerin are added for the polymerization.

21. The process of claim 20,
**characterized in that**, when glycerin is used, the percentage of monomers, based on amino acids, is 0.5 to 25 wt.-%, the percentage of monomers, based on betaine, is 0.5 to 22 wt.-% and the percentage of methacrylate monomers is 99 to 53 wt.-%.

## Revendications

1. Lentille de contact à hydrogel, **caractérisée en ce que** sa matière de base contient à l'état copolymérisé, des monomères modifiés par des acides aminés, et des monomères modifiés par de la bétaïne.

2. Lentille de contact à hydrogel selon la revendication 1, **caractérisée en ce que** l'acide aminé est choisi parmi les acides aminés existants dans le collagène naturel de la cornée, en particulier la glycine, la proline, la glutamine, l'alanine, l'arginine, l'asparagine, la lysine, la leucine, la sérine, l'isoleucine, de préférence la glycine.

3. Lentille de contact à hydrogel selon la revendication 1 ou 2, **caractérisée en ce que** le monomère modifié par un acide aminé est un acide aminé de méthacryloyle.

4. Lentille de contact à hydrogel selon l'une quelconque des revendications précédentes, **caractérisée en ce que** le monomère modifié par un acide aminé est copolymérisé avec une chaîne principale et/ou une chaîne latérale de la matière de base de la lentille de contact.

5. Lentille de contact à hydrogel selon l'une quelconque des revendications précédentes, **caractérisée en ce que** la proportion d'acides aminés dans le polymère est de 0,5 à 25% en poids, de préférence de 0,5 à 10% en poids, et de manière particulièrement préférée d'environ 3% en poids.

6. Lentille de contact à hydrogel selon l'une quelconque des revendications précédentes, **caractérisée en ce que** la bétaïne est une sulfobétaïne, de préférence la N-(3-sulfopropyl)-N-méthacryloxyéthyl-N,N-diméthylammoniumbétaïne (SPE) et/ou une carboxybétaïne, laquelle forme un polymère mixte exempt de blocs avec la matière de base.

7. Lentille de contact à hydrogel selon la revendication 6, **caractérisée en ce que** la proportion de bétaïne dans le polymère est de 0,5 à 22% en poids, de préférence de 0,5 à 10% en poids, et de manière particulièrement préférée d'environ 3% en poids.

8. Lentille de contact à hydrogel selon l'une quelconque des revendications précédentes, **caractérisée en ce que** la matière de base de la lentille de contact contient du méthacrylate d'hydroxyéthyle (HEMA) et/ou du méthacrylate d'hydroxypropyle (HPMA) et/ou de la vinylpyrrolidone (VP) et/ou des dérivés acrylamide, de préférence le diméthylacrylamide.

9. Lentille de contact à hydrogel selon la revendication 8, **caractérisée en ce que** la matière de base dans le polymère en constitue 53 à 99% en poids, de préférence 80 à 99% en poids, et de manière particulièrement préférée 94% en poids.

10. Lentille de contact à hydrogel selon l'une quelconque des revendications précédentes, **caractérisée en ce que** l'indice de réfraction de la lentille de contact est de 1,22 à 1,51.

11. Lentille de contact à hydrogel selon l'une quelconque des revendications précédentes, **caractérisée en ce que** la lentille de contact à l'état gonflé contient plus de 50% en poids d'eau, en particulier de 55 à 60% en poids d'eau.

12. Lentille de contact à hydrogel selon l'une quelconque des revendications précédentes, **caractérisée en ce que** la perméabilité à O₂ possède une valeur de coefficient de > 8x10⁻¹¹, de préférence > 15x10⁻¹¹, et de manière particulièrement préférée d'environ 23x10⁻¹¹.

13. Procédé de préparation d'une matière polymère destinée à une lentille de contact à hydrogel, en particulier selon l'une quelconque des revendications précédentes, **caractérisé par** les étapes :
mélanger des monomères méthacrylate, des monomères à base d'acide aminé, et des monomères à base de bétaïne, et
polymériser ces matières avec un amorceur et un agent de réticulation.

14. Procédé selon la revendication 13,
**caractérisé en ce que** des amorceurs à radicaux, en particulier les composés azoïques et/ou les composés peroxy, et/ou des amorceurs de réaction photochimiques sont employés en tant qu'amorceurs.

15. Procédé selon la revendication 13 ou 14,
**caractérisé en ce que** l'agent de réticulation y est introduit en une quantité de 0,01 à 3% en poids, de préférence de 0,5 à 2% en poids, de manière particulièrement préférée de 0,1 à 0,5% en poids.

16. Procédé selon l'une quelconque des revendications 13 à 15,
**caractérisé en ce que** la lentille de contact est polymérisée seule sous la forme de lentille moulée, avec une durée de polymérisation inférieure à 1 heure.

17. Procédé selon la revendication 16,
**caractérisé en ce que** l'amorceur de réaction est introduit en une quantité de 0,2 à 0,5% en poids.

18. Procédé selon l'une quelconque des revendications 13 à 15,
**caractérisé en ce que** le mélange de matières est d'abord polymérisé en une matière en forme de bloc, de préférence en forme de barre, avec régulation de la température pendant environ 1 à 3 jours, puis les lentilles de contact individuelles sont ébauchées mécaniquement à partir de la matière en bloc.

19. Procédé selon la revendication 18,
**caractérisé en ce que** l'amorceur de réaction y est introduit en une quantité de 0,05 à 0,2% en poids.

20. Procédé selon l'une quelconque des revendications 13 à 19,
**caractérisé en ce que** jusqu'à 20% de glycérine y est introduit pour la polymérisation.

21. Procédé selon la revendication 20,
**caractérisé en ce que**, lors de l'utilisation de glycérine, la proportion des monomères à base d'acide aminé est de 0,5 à 25% en poids, la proportion des monomères à base de bétaïne est de 0,5 à 22% en poids, et la proportion des monomères méthacrylate est de 99 à 53% en poids.
